# EUROPEAN PATENT APPLICATION

(11) **EP 4 588 727 A1**
(43) Date of publication of application: **23.07.2025**
(21) Application number: 24223859.0
(22) Date of filing: 31.12.2024
(51) Int. Cl.: B60S 1/34

(54) **WIPER DEVICE**

(30) Priority: 22.01.2024 JP 2024007634
(71) Applicant: Mitsuba Corporation, Kiryu-shi, Gunma 376-8555 (JP)
(72) Inventor: NAKAJIMA, Nobutaka, Kiryu-shi, Gunma, 3768555 (JP)
(74) Representative: Kurig, Thomas

(57) **Abstract**

An arm head (50) includes: outer surface parts (51A, 51B); a linkage recess (58) provided between the outer surface parts (51A, 51B); and front head-side abutment surfaces (HB1, HB3) and rear head-side abutment surfaces (HB2, HB4) provided at the outer surface parts (51A, 51B) and disposed on two sides of the linkage recess (58) in a long-side direction of the arm head (50). An arm shank (40) includes: inner surface parts (49A, 49B); a linkage shaft (43) provided between the inner surface parts (49A, 49B); and front shank-side abutment surfaces (SB1, SB3) and rear shank-side abutment surfaces (SB2, SB4) provided at the inner surface parts (49A, 49B), disposed on two sides of the linkage shaft (43) in a long-side direction of the arm shank (40), and abutted against the front head-side abutment surfaces (HB1, HB3) and the rear head-side abutment surfaces (HB2, HB4).

## Description

### BACKGROUND

### Technical Field

The disclosure relates to a wiper device that includes a wiper blade wiping a wiping surface and is swung by a swing shaft.

### Related Art

Patent Document 1 describes a wiper arm mounted on a vehicle and the like. The wiper arm includes: an arm head fixed to a drive shaft; and a retainer rotatably linked to the arm head. A pair of sidewall parts are provided on a front side of the arm head, and a linkage shaft is provided on a front side between the pair of sidewall parts. A linkage recess is provided on a rear side of the retainer, and the linkage recess is linked to the linkage shaft of the arm head.

### Related Art Documents

### Patent Documents

[Patent Document 1] Japanese Patent Application Laid-Open No. 2017-197096

### SUMMARY

### Problem to Be Solved

However, in the art described in Patent Document 1, since the linkage shaft is disposed at a front end of the arm head, the retainer is prone to rattling with respect to the arm head in a wiping direction of a wiper blade. Such rattling of the retainer with respect to the arm head leads to a decrease in wiping performance of the wiper blade and generation of abnormal noise from the wiper device.

An objective of the disclosure is to provide a wiper device capable of further suppressing generation of abnormal noise while exhibiting good wiping performance.

### Means for Solving Problem

In an aspect of a wiper device, the wiper device includes: an arm head fixed to a swing shaft; an arm shank having a base end side rotatably mounted to the arm head; and a wiper blade mounted to a tip side of the arm shank and wiping a wiping surface. The arm head includes: a pair of head-side sidewall parts respectively oriented toward one side and the other side in a wiping direction of the wiper blade; a head-side linkage part provided between the pair of head-side sidewall parts and extending in the wiping direction of the wiper blade; and a first head-side abutment surface and a second head-side abutment surface each provided at the pair of head-side sidewall parts and respectively disposed on two sides of the head-side linkage part in a long-side direction of the arm head. The arm shank includes: a pair of shank-side sidewall parts respectively oriented toward one side and the other side in the wiping direction of the wiper blade and respectively opposed to the pair of head-side sidewall parts; a shank-side linkage part provided between the pair of shank-side sidewall parts, extending in the wiping direction of the wiper blade, and linked to the head-side linkage part; and a first shank-side abutment surface and a second shank-side abutment surface each provided at the pair of shank-side sidewall parts, respectively disposed on two sides of the shank-side linkage part in a long-side direction of the arm shank, and respectively abutted against the first head-side abutment surface and the second head-side abutment surface in the wiping direction of the wiper blade.

### Effects

According to the disclosure, it is possible to realize a wiper device capable of further suppressing generation of abnormal noise while exhibiting good wiping performance.

### BRIEF DESCRIPTION OF THE DRAWINGS

FIG. 1 is a view of a wiper device viewed from a surface side.
FIG. 2 is a view of the wiper device viewed from a lateral side.
FIG. 3 is a view of the wiper device viewed from a back side.
FIG. 4 is a cross-sectional view along line A-A in FIG. 1.
FIG. 5 is a perspective view showing an arm shank and a wiper blade.
FIG. 6 is an enlarged perspective half-sectional view showing an inner side of a base end side of the arm shank.
FIG. 7 is a perspective view of an arm head viewed from the surface side.
FIG. 8 is a perspective view of the arm head viewed from the back side.
FIG. 9 is a view showing an arrangement relationship of the arm head, a tension spring, and a base end side of the wiper blade.
FIG. 10 is a view showing a tilted state of the arm shank with respect to the arm head during wiping of the wiper blade toward one side.
FIG. 11 is a view showing a tilted state of the arm shank with respect to the arm head during wiping of the wiper blade toward the other side.

### DESCRIPTION OF THE EMBODIMENTS

Hereinafter, an embodiment of the disclosure will be described in detail with reference to the drawings.

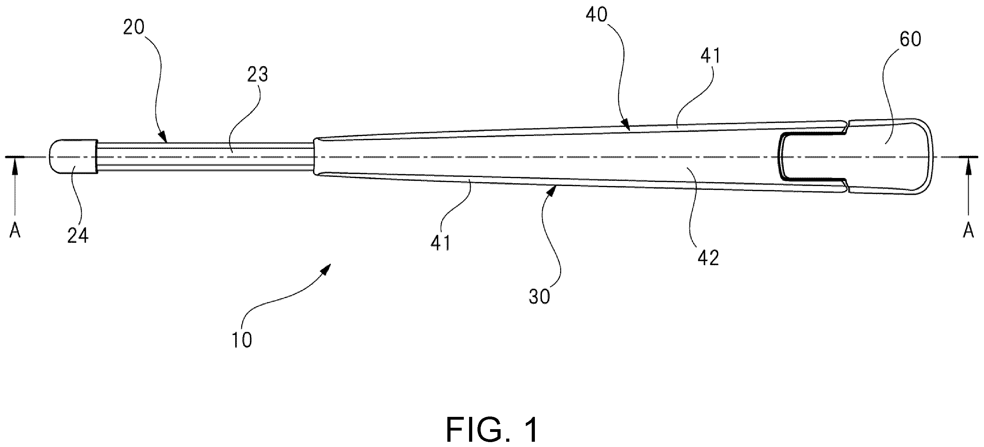

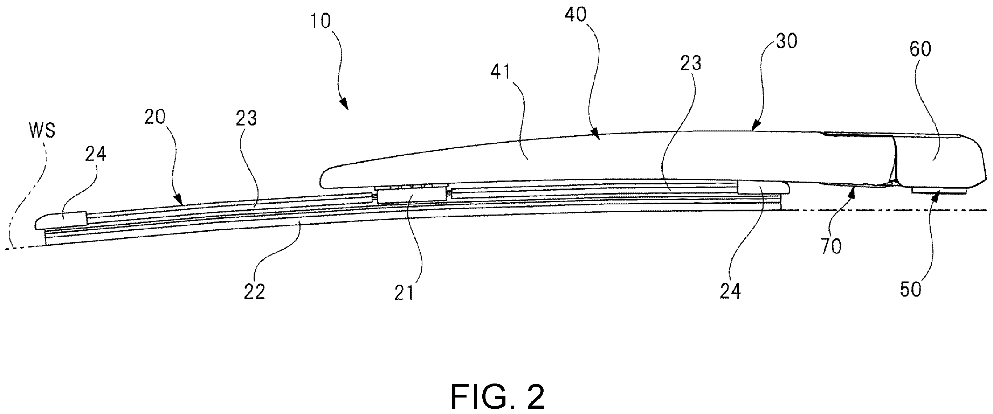

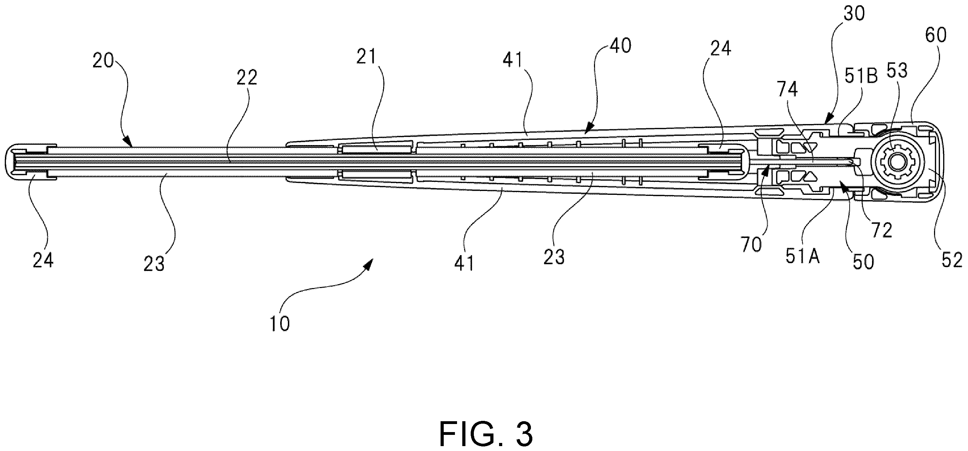

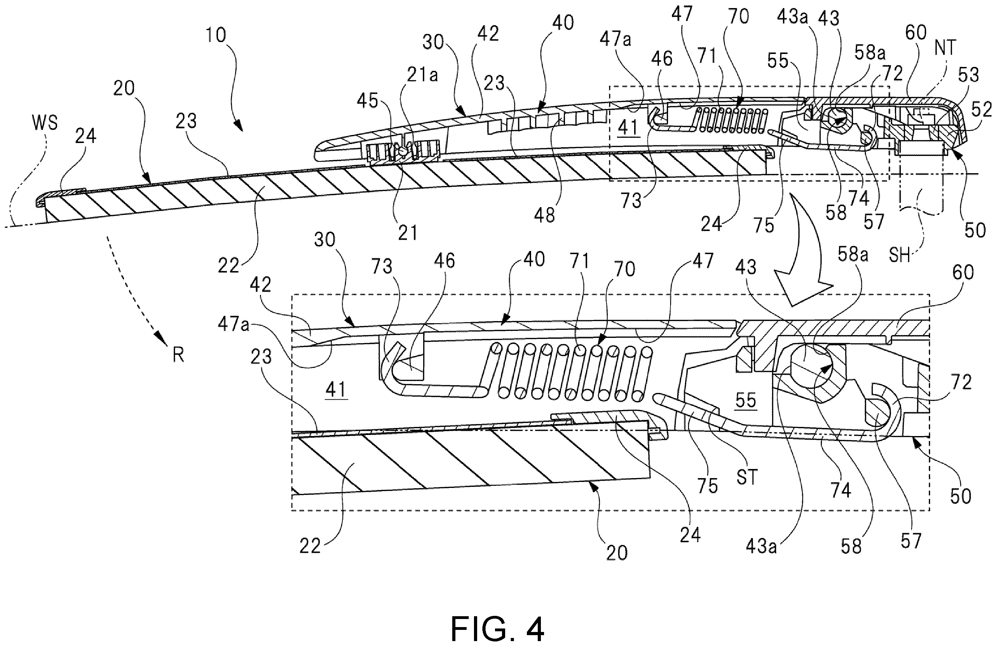

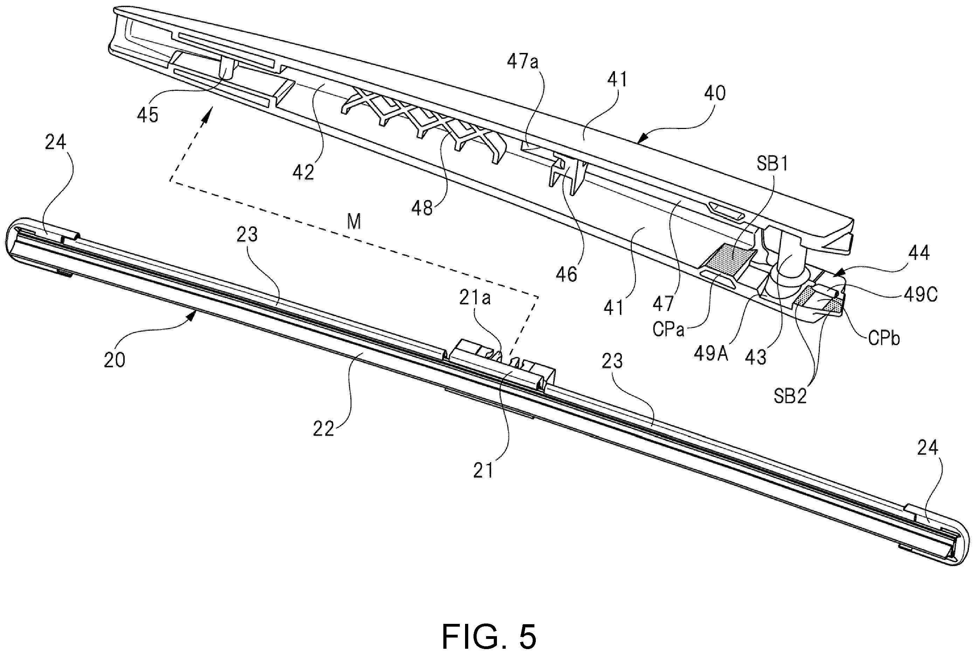

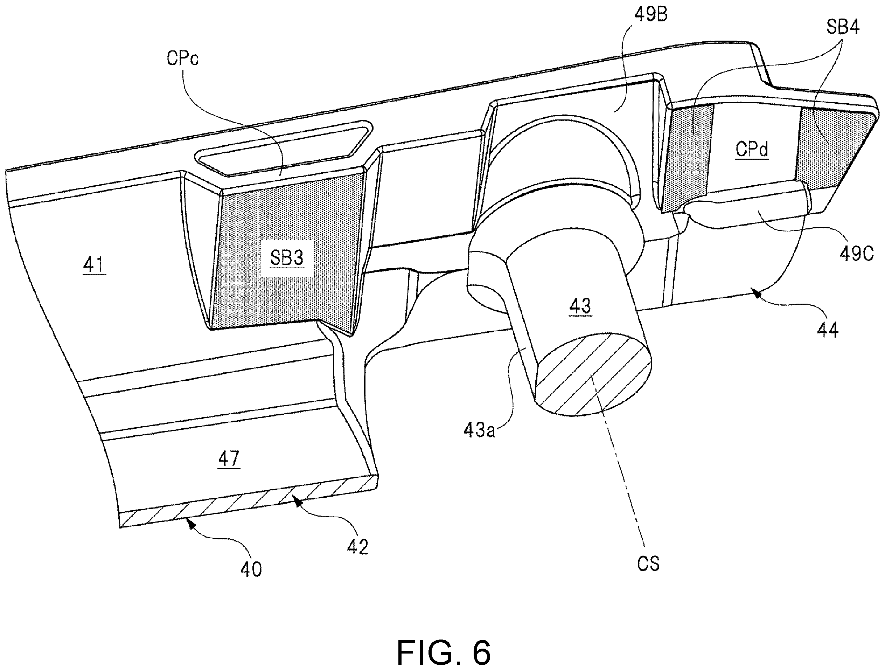

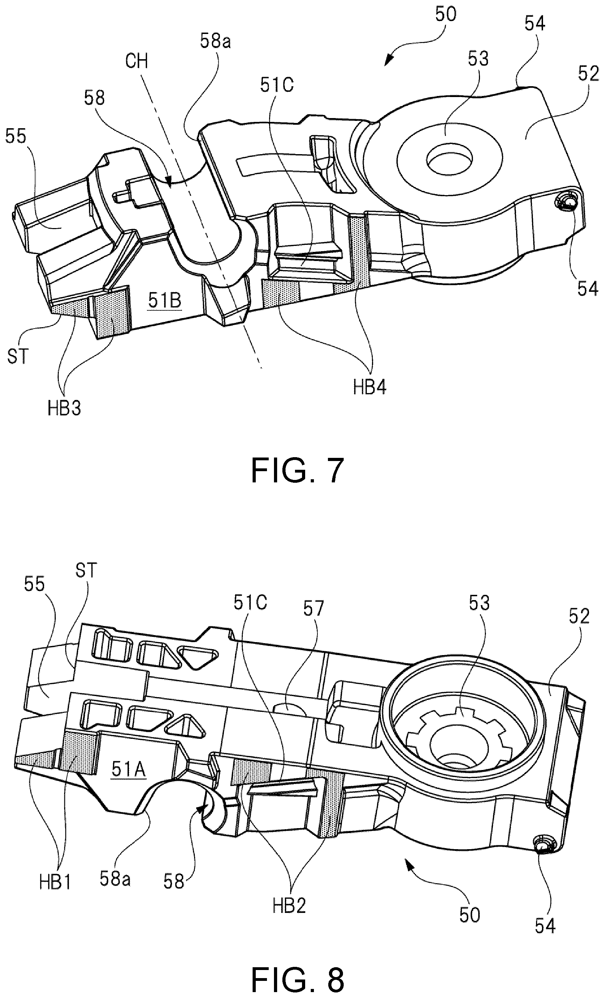

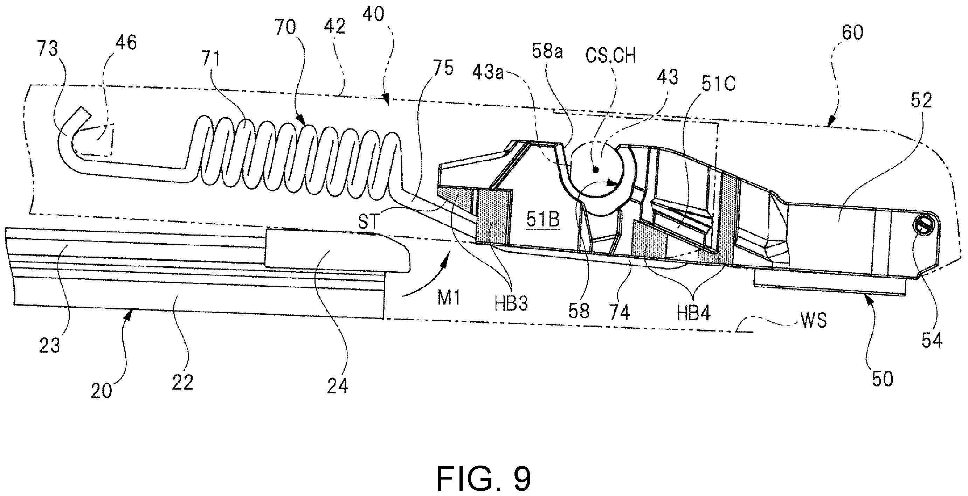

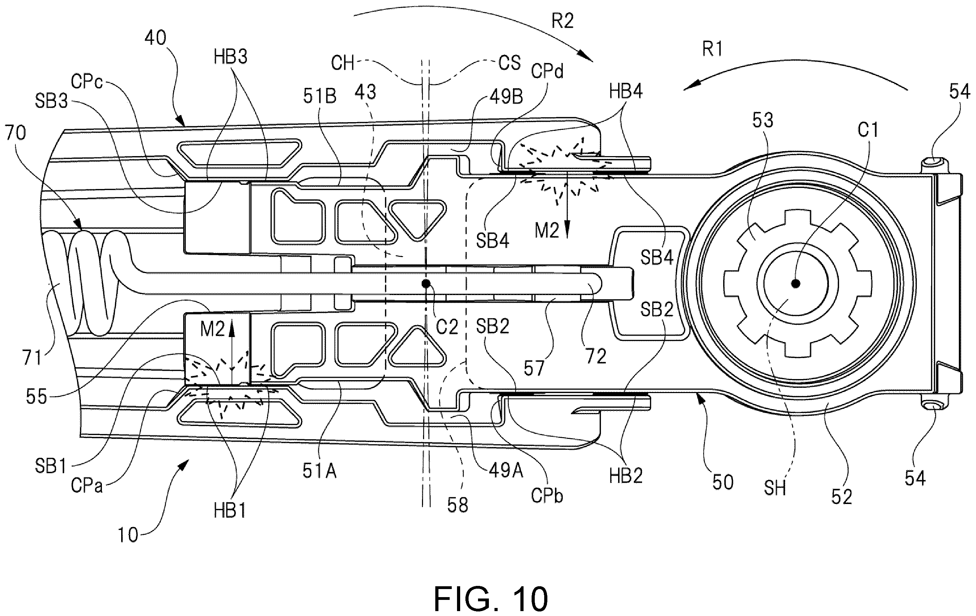

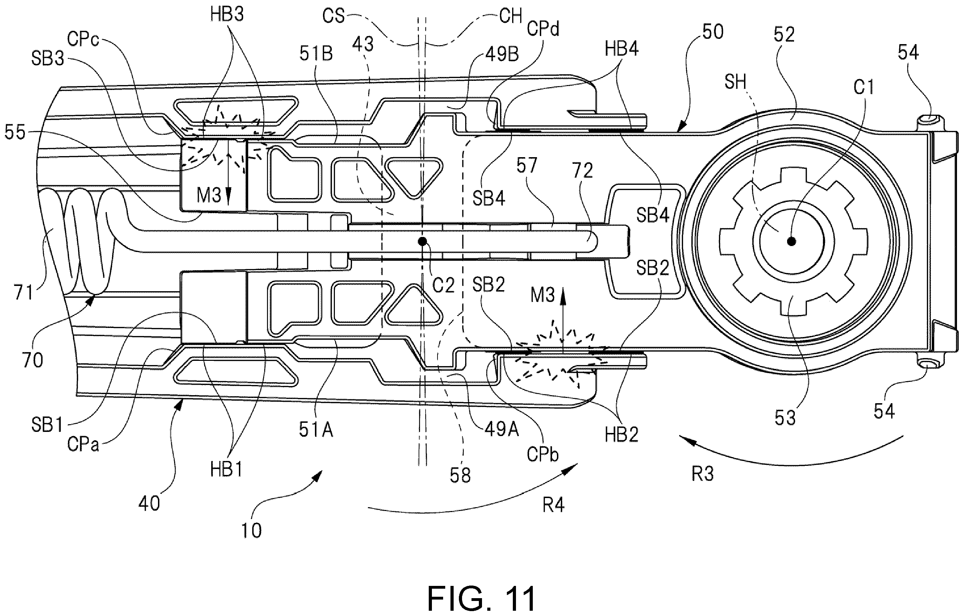

FIG. 1 shows a view of a wiper device viewed from a surface side. FIG. 2 shows a view of the wiper device viewed from a lateral side. FIG. 3 shows a view of the wiper device viewed from a back side. FIG. 4 shows a cross-sectional view along line A-A in FIG. 1. FIG. 5 shows a perspective view of an arm shank and a wiper blade. FIG. 6 shows an enlarged perspective half-sectional view of an inner side of a base end side of the arm shank. FIG. 7 shows a perspective view of an arm head viewed from the surface side. FIG. 8 shows a perspective view of the arm head viewed from the back side. FIG. 9 shows a view of an arrangement relationship of the arm head, a tension spring, and a base end side of the wiper blade. FIG. 10 shows a view of a tilted state of the arm shank with respect to the arm head during wiping of the wiper blade toward one side. FIG. 11 shows a view of a tilted state of the arm shank with respect to the arm head during wiping of the wiper blade toward the other side.

### [Overview of wiper device]

A wiper device 10 shown in FIG. 1 to FIG. 4 serves to wipe a windshield (wiping surface WS) provided at a back door of a vehicle such as an automobile. The wiper device 10 includes a wiper blade 20 that wipes the wiping surface WS, and a wiper arm 30 to which the wiper blade 20 is mounted.

A base end side (right side in FIG. 1 to FIG. 4) of the wiper arm 30 is fixed by a fastening nut NT to a tip side of a swing shaft SH of a rear wiper motor (not shown) accommodated inside the back door. Accordingly, the swing shaft SH swings by driving of the rear wiper motor, and thus the wiper arm 30 and the wiper blade 20 swing on the wiping surface WS.

The wiper blade 20 is mounted to a tip side (left side in FIG. 1 to FIG. 4) of the wiper arm 30. The wiper blade 20 includes a linkage member 21 that is rotatably mounted to the tip side of the wiper arm 30, and a blade rubber 22 that is held by the linkage member 21.

Herein, the blade rubber 22 is formed into an elongated shape by extrusion molding of natural rubber or the like, and is held to the linkage member 21 via a pair of plate springs (not shown) also called vertebrae. In addition, covers 23 covering a back surface side of the pair of plate springs and the blade rubber 22 are respectively provided on both sides in a long-side direction of the linkage member 21. Furthermore, end caps 24 are respectively mounted to both sides in the long-side direction of the pair of plate springs and the blade rubber 22. Accordingly, the blade rubber 22 is prevented from falling out of the pair of plate springs.

The blade rubber 22 is pressed to the wiping surface WS by a spring force of a tension spring 70 (refer to FIG. 4) provided on an inner side the wiper arm 30. The wiper blade 20 performs a reciprocating wiping action over a predetermined wiping range (not shown) on the wiping surface WS by a swing motion of the wiper arm 30. Accordingly, rainwater, dust, etc. adhering to the wiping surface WS are wiped off.

Herein, as shown in FIG. 1 to FIG. 4, the wiper arm 30 includes an arm shank 40, an arm head 50, a cover member 60, and a tension spring 70.

### [Arm shank]

As shown in FIG. 4 to FIG. 6, the arm shank 40 is formed by injection molding of a resin material such as plastic into a substantially rod shape which is tapered. A cross-section of the arm shank 40 along a direction orthogonal to a long-side direction thereof is formed into a substantially U-shape, and the arm shank 40 includes a pair of sidewall parts 41. The sidewall parts 41 are respectively disposed to be opposed to each other on one side and the other side in a wiping direction (up-down direction in FIG. 1 and FIG. 3) of the wiper blade 20, i.e., on both sides in a short-side direction of the arm shank 40.

In addition, the arm shank 40 includes one top wall part 42. Specifically, the top wall part 42 is provided on a side opposite to the wiping surface WS side of the pair of sidewall parts 41, and connects the pair of sidewall parts 41 to each other. In other words, the pair of sidewall parts 41 are respectively integrally provided on both sides in the short-side direction of the top wall part 42.

A linkage shaft 43 rotatably mounted to the arm head 50 is integrally provided on an inner side of the arm shank 40 surrounded by the pair of sidewall parts 41 and the one top wall part 42, on a base end side (right side in FIG. 5 and FIG. 6) of the arm shank 40. In other words, the base end side of the arm shank 40 is rotatably mounted to the arm head 50. Specifically, the linkage shaft 43 extends in the short-side direction (wiping direction of the wiper blade 20) of the arm shank 40, and both axial sides of the linkage shaft 43 are respectively connected to the pair of sidewall parts 41. In addition, the linkage shaft 43 is disposed at a spot of a notch part 44 provided on the base end side of the top wall part 42.

Furthermore, as shown in FIG. 4 and FIG. 6, the linkage shaft 43 forms a shape in which a part of an outer circumferential part of a cylinder is cut out, such that a cross-section in the long-side direction of the arm shank 40 forms a substantially D-shape. In other words, the linkage shaft 43 has a planar part 43a and forms a so-called D-cut shape. Accordingly, the linkage shaft 43 is capable of being easily linked to a linkage recess 58 of the arm head 50.

The linkage shaft 43 corresponds to a shank-side linkage part in the disclosure.

In addition, a mounting shaft 45 to which the linkage member 21 of the wiper blade 20 is rotatably mounted is integrally provided on the inner side of the arm shank 40, on the tip side (left side in FIG. 4 and FIG. 5) of the arm shank 40. In other words, a long-side direction central part of the wiper blade 20 is rotatably mounted on the tip side of the arm shank 40. Specifically, similar to the linkage shaft 43, the mounting shaft 45 extends in the short-side direction of the arm shank 40, and both axial sides of the mounting shaft 45 are respectively connected to the pair of sidewall parts 41.

The mounting shaft 45 is formed into a substantially cylindrical shape, and as indicated by a broken line arrow M in FIG. 5, a linkage part 21a provided at the linkage member 21 is capable of being mounted to the mounting shaft 45 in a one-touch manner by a so-called snap fit. In other words, the wiper blade 20 is capable of being easily attached to and detached from the arm shank 40 and is excellent in maintainability.

Furthermore, a shank-side engagement part 46 with which a tip side (left side in FIG. 4) of the tension spring 70 is engaged is integrally provided on the inner side of the arm shank 40, between the linkage shaft 43 and the mounting shaft 45 in the long-side direction of the arm shank 40. Specifically, the shank-side engagement part 46 is provided between the pair of sidewall parts 41 and is fixed to three spots, i.e., the sidewall parts 41 and the one top wall part 42. Accordingly, sufficient strength of the shank-side engagement part 46 is ensured.

The shank-side engagement part 46 is disposed close to the top wall part 42 in a height direction (up-down direction in FIG. 4) of the arm shank 40. In other words, the shank-side engagement part 46 is disposed at a deep spot on the inner side of the arm shank 40. Accordingly, the tip side of the tension spring 70 is also disposed close to the top wall part 42.

A base end side (right side in FIG. 4) of the tension spring 70 is engaged with a head-side engagement part 57 (refer to FIG. 4 and FIG. 8) of the arm head 50. Herein, the head-side engagement part 57 is disposed closer to the wiping surface WS than the shank-side engagement part 46 in the height direction of the arm shank 40. Accordingly, as shown in FIG. 4, the tension spring 70 is engageable with each of the shank-side engagement part 46 and the head-side engagement part 57 while avoiding the linkage shaft 43 and the linkage recess 58.

Herein, the tension spring 70 is provided between the arm head 50 and the arm shank 40, and generates a spring force pressing the wiper blade 20 toward the wiping surface WS. As shown in FIG. 4, the tension spring 70 includes a coil part 71, a first hook part 72 engaged with the head-side engagement part 57, and a second hook part 73 engaged with the shank-side engagement part 46. In addition, a straight part 74 extending in an extending direction of the arm shank 40 and an inclined part 75 inclined with respect to the straight part 74 are provided between the coil part 71 and the first hook part 72.

By providing the straight part 74 and the inclined part 75 at the tension spring 70, as shown in FIG. 2 and FIG. 4, the tension spring 70 can be substantially hidden on the inner side of the arm shank 40.

In addition, as shown in FIG. 4 to FIG. 6, a spring accommodating recess 47 is provided on the inner side of the arm shank 40, on the base end side (arm head 50 side) of the top wall part 42.

The spring accommodating recess 47 extends in the long-side direction of the arm shank 40, and a length dimension of the spring accommodating recess 47 is approximately half a length dimension of the top wall part 42. In addition, the spring accommodating recess 47 is recessed by a predetermined depth from the inner side to an outer side of the arm shank 40. Specifically, a thickness dimension of a spot of the top wall part 42 at which the spring accommodating recess 47 is provided is approximately half a thickness dimension of a spot of the top wall part 42 at which the spring accommodating recess 47 is not provided.

A tip side (left side in FIG. 4 and FIG. 5) of the spring accommodating recess 47 is provided with a taper part 47a that gently slopes from the spot of the top wall part 42 at which the spring accommodating recess 47 is provided toward the spot of the top wall part 42 at which the spring accommodating recess 47 is not provided. Accordingly, stress concentration is suppressed on the tip side of the spring accommodating recess 47 in the top wall part 42.

The shank-side engagement part 46 is disposed in a region of the spring accommodating recess 47 in the long-side direction of the arm shank 40, in the vicinity of the taper part 47a. In other words, the spot of the top wall part 42 at which the shank-side engagement part 46 is provided is thinned, but sufficient rigidity is ensured. Thus, the shank-side engagement part 46 can be disposed closer to the top wall part 42.

Accordingly, when the arm shank 40 is raised with respect to the arm head 50 (not shown), a part of the coil part 71 of the tension spring 70 is capable of being accommodated in the spring accommodating recess 47 without contacting the top wall part 42.

In addition, a reinforcing rib 48 is provided on the inner side of the arm shank 40, between the taper part 47a and the mounting shaft 45 in the long-side direction of the top wall part 42. The reinforcing rib 48 protrudes toward the inner side of the arm shank 40 and is in a substantially mesh pattern. Specifically, the reinforcing rib 48 is fixed to three spots, i.e., the pair of sidewall parts 41 and the one top wall part 42.

Accordingly, rigidity can be sufficiently ensured at spots of the arm shank 40 at which the reinforcing rib 48 is provided. Herein, the shank-side engagement part 46 is provided in the vicinity of the reinforcing rib 48. Thus, deformation is effectively suppressed at a spot of the arm shank 40 at which the shank-side engagement part 46 is provided, i.e., at a spot that is relatively prone to bearing a load.

Furthermore, as shown in FIG. 5, FIG. 6, FIG. 10, and FIG. 11, inner surface parts 49A and 49B are respectively provided on base end sides (sides on which the notch part 44 is provided) of the pair of sidewall parts 41. The linkage shaft 43 is provided between the pair of inner surface parts 49A and 49B, and the pair of inner surface parts 49A and 49B are configured to be respectively opposed to a pair of outer surface parts 51A and 51B (refer to FIG. 7 and FIG. 8) provided at the arm head 50.

Specifically, the inner surface parts 49A and 49B are respectively oriented toward one side and the other side in the wiping direction (up-down direction in FIG. 10 and FIG. 11) of the wiper blade 20. One inner surface part 49A is opposed to one outer surface part 51A of the arm head 50, and the other inner surface part 49B is opposed to the other outer surface part 51B of the arm head 50.

The pair of inner surface parts 49A and 49B correspond to a pair of shank-side sidewall parts in the disclosure.

As shown in FIG. 5, one front protrusion CPa and one rear protrusion CPb are integrally provided at the one inner surface part 49A. The front protrusion CPa and the rear protrusion CPb protrude from the one inner surface part 49A toward the one outer surface part 51A (refer to FIG. 8) of the arm head 50. A front shank-side abutment surface SB1 (quantity: one) is provided at a top of the front protrusion CPa, and rear shank-side abutment surfaces SB2 (quantity: two) are provided at a top of the rear protrusion CPb.

The front shank-side abutment surface SB1 and the rear shank-side abutment surfaces SB2 are respectively disposed on two sides of the linkage shaft 43 in the long-side direction of the arm shank 40. In other words, the front shank-side abutment surface SB1 and the rear shank-side abutment surfaces SB2 are disposed with the linkage shaft 43 interposed therebetween. In addition, in the wiping direction of the wiper blade 20, the front shank-side abutment surface SB1 and the rear shank-side abutment surfaces SB2 are respectively abutted against front head-side abutment surfaces HB1 and rear head-side abutment surfaces HB2 (refer to FIG. 8) provided at the arm head 50.

Furthermore, as shown in FIG. 6, the other front protrusion CPc and the other rear protrusion CPd are integrally provided at the other inner surface part 49B. The front protrusion CPc and the rear protrusion CPd protrude from the other inner surface part 49B toward the other outer surface part 51B (refer to FIG. 7) of the arm head 50. A front shank-side abutment surface SB3 (quantity: one) is provided at a top of the front protrusion CPc, and rear shank-side abutment surfaces SB4 (quantity: two) are provided at a top of the rear protrusion CPd.

The front shank-side abutment surface SB3 and the rear shank-side abutment surfaces SB4 are respectively disposed on two sides of the linkage shaft 43 in the long-side direction of the arm shank 40. In other words, the front shank-side abutment surface SB3 and the rear shank-side abutment surfaces SB4 are disposed with the linkage shaft 43 interposed therebetween. In addition, in the wiping direction of the wiper blade 20, the front shank-side abutment surface SB3 and the rear shank-side abutment surfaces SB4 are respectively abutted against front head-side abutment surfaces HB3 and rear head-side abutment surfaces HB4 (refer to FIG. 7) provided at the arm head 50.

Herein, in the wiping direction of the wiper blade 20, the front shank-side abutment surface SB1 and the front shank-side abutment surface SB3 face each other, and the rear shank-side abutment surfaces SB2 and the rear shank-side abutment surfaces SB4 face each other.

The front shank-side abutment surfaces SB1 and SB3 respectively correspond to a first shank-side abutment surface in the disclosure, and the rear shank-side abutment surfaces SB2 and SB4 respectively correspond to a second shank-side abutment surface in the disclosure. In addition, the front protrusions CPa and CPc respectively correspond to a first protrusion in the disclosure, and the rear protrusions CPb and CPd respectively correspond to a second protrusion in the disclosure.

Herein, in FIG. 5 and FIG. 6, to make it easier to see the arrangement spots of the front shank-side abutment surfaces SB1 and SB3 and the rear shank-side abutment surfaces SB2 and SB4, the front shank-side abutment surfaces SB1 and SB3 and the rear shank-side abutment surfaces SB2 and SB4 are respectively shown with hatching.

Furthermore, lock claws 49C are integrally provided respectively at the pair of inner surface parts 49A and 49B. The pair of lock claws 49C respectively protrude by a predetermined height toward the arm head 50. The pair of lock claws 49C are respectively capable of entering inner sides of lock grooves 51C (refer to FIG. 7 and FIG. 8) provided at the pair of outer surface parts 51A and 51B of the arm head 50.

Specifically, the pair of lock claws 49C are respectively mated with the pair of lock grooves 51C when the arm shank 40 is raised with respect to the arm head 50 (when configuring in a lock-back state). Accordingly, the lock-back state of the arm shank 40 is maintained.

### [Arm head]

As shown in FIG. 7 to FIG. 9, the arm head 50 is formed into a substantially rectangular parallelepiped shape by injection molding of a resin material such as plastic, and extends in the long-side direction of the wiper arm 30 (refer to FIG. 3). The arm head 50 includes a pair of outer surface parts 51A and 51B oriented respectively toward the one side and the other side in the wiping direction (up-down direction in FIG. 1 and FIG. 3) of the wiper blade 20.

The outer surface parts 51A and 51B are respectively oriented toward the one side and the other side in the wiping direction (up-down direction in FIG. 10 and FIG. 11) of the wiper blade 20. One outer surface part 51A is opposed to one inner surface part 49A of the arm shank 40, and the other outer surface part 51B is opposed to the other inner surface part 49B of the arm shank 40.

The pair of outer surface parts 51A and 51B correspond to a pair of head-side sidewall parts in the disclosure.

As shown in FIG. 8, front head-side abutment surfaces HB1 (quantity: two) and rear head-side abutment surfaces HB2 (quantity: two) are provided at the one outer surface part 51A. The front head-side abutment surfaces HB1 and the rear head-side abutment surfaces HB2 are respectively disposed on two sides of the linkage recess 58 in the long-side direction of the arm head 50. In other words, the front head-side abutment surfaces HB1 and the rear head-side abutment surfaces HB2 are disposed with the linkage recess 58 interposed therebetween. In addition, in the wiping direction of the wiper blade 20, the front head-side abutment surfaces HB1 and the rear head-side abutment surfaces HB2 are respectively abutted against the front shank-side abutment surface SB1 and the rear shank-side abutment surfaces SB2 (refer to FIG. 5) provided at the arm shank 40.

Furthermore, as shown in FIG. 7, front head-side abutment surfaces HB3 (quantity: two) and rear head-side abutment surfaces HB4 (quantity: two) are provided at the other outer surface part 51B. The front head-side abutment surfaces HB3 and the rear head-side abutment surfaces HB4 are respectively disposed on two sides of the linkage recess 58 in the long-side direction of the arm head 50. In other words, the front head-side abutment surfaces HB3 and the rear head-side abutment surfaces HB4 are disposed with the linkage recess 58 interposed therebetween. In addition, in the wiping direction of the wiper blade 20, the front head-side abutment surfaces HB3 and the rear head-side abutment surfaces HB4 are respectively abutted against the front shank-side abutment surface SB3 and the rear shank-side abutment surfaces SB4 (refer to FIG. 6) provided at the arm shank 40.

Herein, in the wiping direction of the wiper blade 20, the front head-side abutment surfaces HB1 and the front head-side abutment surfaces HB3 face directions opposite to each other, and the rear head-side abutment surfaces HB2 and the rear head-side abutment surfaces HB4 face directions opposite to each other.

The front head-side abutment surfaces HB1 and HB3 respectively correspond to a first head-side abutment surface in the disclosure, and the rear head-side abutment surfaces HB2 and HB4 respectively correspond to a second head-side abutment surface in the disclosure.

In addition, as shown in FIG. 9 to FIG. 11, the front head-side abutment surfaces HB1 and HB3 are respectively disposed between the linkage recess 58 and the wiper blade 20 in the long-side direction of the arm head 50. Furthermore, at least parts of the front head-side abutment surfaces HB1 and HB3 on the wiper blade 20 side are disposed at positions farther from the wiping surface WS than the rear head-side abutment surfaces HB2 and HB4.

Specifically, the wiper blade 20 sides of the front head-side abutment surfaces HB1 and HB3 are respectively recessed to the top wall part 42 side of the arm shank 40, and a step part ST is provided at this spot. Accordingly, the wiper blade 20 sides of the front head-side abutment surfaces HB1 and HB3 are disposed at positions farther from the wiping surface WS than the rear head-side abutment surfaces HB2 and HB4, and thus, as indicated by an arrow M1 in FIG. 9, the base end side (right side in FIG. 9) of the wiper blade 20 is capable of being brought close to the arm head 50. Thus, miniaturization of the entire wiper device 10 becomes possible.

In FIG. 7 to FIG. 9, to make it easier to see the arrangement spots of the front head-side abutment surfaces HB1 and HB3 and the rear head-side abutment surfaces HB2 and HB4, the front head-side abutment surfaces HB1 and HB3 and the rear head-side abutment surfaces HB2 and HB4 are respectively shown with hatching.

In addition, a fixed body 52 is provided on the base end side (right side in FIG. 7 and FIG. 8) of the arm head 50. As shown in FIG. 4, the fixed body 52 is a spot that is fixed to the swing shaft SH by the fastening nut NT, and a reinforcing member 53 in an annular shape is inserted (embedded) in the fixed body 52.

The reinforcing member 53 is made of aluminum and has a function of reinforcing the fixed body 52 made of resin. Specifically, the swing shaft SH is inserted through the reinforcing member 53, and a tightening force of the fastening nut NT is applied to the reinforcing member 53. Accordingly, the arm head 50 is capable of being firmly fixed to the swing shaft SH, which is driven to swing, by the fastening nut NT without rattling.

As shown in FIG. 7 and FIG. 8, a pair of protrusions 54 are provided on the base end side of the arm head 50. The protrusions 54 are respectively provided at the pair of outer surface parts 51A and 51B forming the arm head 50. Specifically, the protrusions 54 respectively protrude by a predetermined height from the pair of outer surface parts 51A and 51B to the one side and the other side in the wiping direction of the wiper blade 20. The cover member 60 is rotatably mounted to the protrusions 54. In other words, the cover member 60 is capable of being opened and closed with respect to the arm head 50, taking the pair of protrusions 54 as a rotation center.

Herein, as shown in FIG. 4, upon configuring the cover member 60 in a closed state, the cover member 60 conceals the fastening nut NT. Accordingly, the appearance of the wiper device 10 is improved. On the other hand, upon configuring the cover member 60 in an opened state, the fastening nut NT is exposed to outside. Thus, a fastening tool (not shown) may be used, and it becomes possible to tighten or loosen the fastening nut NT.

In addition, as shown in FIG. 4, FIG. 7, and FIG. 8, a groove part 55 is provided on the tip side (left side in the figures) of the arm head 50 to extend along the long-side direction of the arm head 50. The groove part 55 is disposed at a short-side direction central part (wiping direction central part of the wiper blade 20) of the arm head 50, and is disposed at a spot of the arm head 50 excluding the fixed body 52.

As shown in FIG. 4, a base end side (right side in FIG. 4) of the tension spring 70 enters the groove part 55. The tension spring 70 is in a non-contact state with respect to the groove part 55. Accordingly, the tension spring 70 does not need to project significantly to the wiping surface WS side compared to the arm head 50. Thus, an overall height of the wiper device 10 is suppressed to be low (height reduction).

The head-side engagement part 57 formed into a substantially cylindrical shape is integrally provided on the inner side of the groove part 55. Specifically, the head-side engagement part 57 is disposed at a long-side direction central part of the arm head 50, in the vicinity of the fixed body 52. In addition, the head-side engagement part 57 is disposed to cross the inside of the groove part 55 in the short-side direction (wiping direction of the wiper blade 20) of the arm head 50. Accordingly, the base end side of the tension spring 70 is engageable with the head-side engagement part 57.

Furthermore, as shown in FIG. 7, the linkage recess 58 rotatably supporting the linkage shaft 43 of the arm shank 40 is provided on the tip side of the arm head 50. Specifically, the linkage recess 58 is disposed on the arm shank 40 side (left side in the figure) compared to the head-side engagement part 57 in the long-side direction of the arm head 50. In addition, the linkage recess 58 is provided between the pair of outer surface parts 51A and 51B and extends in the short-side direction (wiping direction of the wiper blade 20) of the arm head 50.

The linkage recess 58 corresponds to a head-side linkage part in the disclosure.

Furthermore, an opening 58a, which serves as a mounting side where the linkage shaft 43 is mounted, is provided on a side (upper side in FIG. 4 and FIG. 7) opposite to the wiping surface WS side of the linkage recess 58. In an assembled state of the wiper device 10, the opening 58a is covered by the cover member 60. Accordingly, the linkage shaft 43 is prevented from detaching from the linkage recess 58. In addition, since the opening 58a is covered by the cover member 60, a surface of the wiper device 10 becomes smooth, and thus generation of wind noise can be suppressed.

In addition, as shown in FIG. 7 to FIG. 9, the lock grooves 51C are respectively provided at the pair of outer surface parts 51A and 51B forming the arm head 50. When the arm shank 40 is configured in the lock-back state with respect to the arm head 50, the pair of lock claws 49C (refer to FIG. 5 and FIG. 6) provided at the arm shank 40 are capable of respectively entering the inner sides of the pair of lock grooves 51C.

### [Regarding wiping action of wiper device]

As shown in FIG. 10, upon driving of the rear wiper motor to rotate the swing shaft SH in a counterclockwise direction (one direction), the arm head 50 is rotated in a direction of an arrow R1 around an axial center C1. Accordingly, the arm shank 40 mounted to the arm head 50 is also about to rotate in the direction of the arrow R1 around the axial center C1.

However, the wiper blade 20 mounted to the tip side of the arm shank 40 is about to remain in place due to a frictional force with the wiping surface WS. Accordingly, the arm shank 40 is about to rotate in a direction of an arrow R2 around an axial center C2 with respect to the arm head 50.

Herein, the linkage part between the arm shank 40 and the arm head 50 is the spot at which the linkage shaft 43 and the linkage recess 58 are disposed. In other words, the axial center C2 is disposed at an axial central part of the linkage shaft 43 and the linkage recess 58.

Since the arm head 50 is about to rotate in the direction of the arrow R1, and the arm shank 40 is about to rotate in the direction of the arrow R2, the arm head 50 moves the arm shank 40 in a manner that gouges the arm shank 40. At this time, an axial line CS (refer to FIG. 6) of the linkage shaft 43 and an axial line CH (refer to FIG. 7) of the linkage recess 58 are about to shift from each other around the axial center C2 (refer to FIG. 10).

Accordingly, as indicated by arrows M2 in FIG. 10, the front shank-side abutment surface SB1 of the arm shank 40 is strongly abutted against the front head-side abutment surfaces HB1 of the arm head 50, and the rear shank-side abutment surfaces SB4 of the arm shank 40 are strongly abutted against the rear head-side abutment surfaces HB4 of the arm head 50.

Thus, during the wiping action in the one direction of the wiper device 10, rattling of the arm shank 40 with respect to the arm head 50 is suppressed. At this time, as indicated by the arrows M2, the arm shank 40 and the arm head 50 are abutted against each other at two spots in the long-side direction thereof. In other words, the load applied to the linkage part (linkage shaft 43 and linkage recess 58) between the arm shank 40 and the arm head 50 is distributed.

On the other hand, as shown in FIG. 11, upon driving of the rear wiper motor to rotate the swing shaft SH in the clockwise direction (other direction), the arm head 50 is rotated in a direction of an arrow R3 around the axial center C1. In this case, the arm shank 40 is about to rotate in a direction of an arrow R4 around the axial center C2 with respect to the arm head 50.

Since the arm head 50 is about to rotate in the direction of the arrow R3, and the arm shank 40 is about to rotate in the direction of arrow R4, the arm head 50 moves the arm shank 40 in a manner that gouges the arm shank 40. At this time, the axial line CS of the linkage shaft 43 and the axial line CH of the linkage recess 58 are about to shift from each other around the axial center C2 (refer to FIG. 11).

Accordingly, as indicated by arrows M3 in FIG. 11, the rear shank-side abutment surfaces SB2 of the arm shank 40 are strongly abutted against the rear head-side abutment surfaces HB2 of the arm head 50, and the front shank-side abutment surface SB3 of the arm shank 40 is strongly abutted against the front head-side abutment surfaces HB3 of the arm head 50.

Thus, during the wiping action in the other direction of the wiper device 10, rattling of the arm shank 40 with respect to the arm head 50 is suppressed. At this time, as indicated by the arrows M3, the arm shank 40 and the arm head 50 are abutted against each other at two spots in the long-side direction thereof. In other words, the load applied to the linkage part (linkage shaft 43 and linkage recess 58) between the arm shank 40 and the arm head 50 is distributed.

Herein, depending on the vehicle model on which the wiper device 10 is installed, there may be cases where a curvature of the wiping surface WS is large. In such cases, as indicated by a broken line arrow R in FIG. 4, the wiper blade 20 swings significantly around the mounting shaft 45 with respect to the arm shank 40. At this time, as shown by an enlarged portion enclosed by a broken line in FIG. 4, the base end side (right side in FIG. 4) of the wiper blade 20 is brought close to the step part ST of the arm head 50 while entering the inner side of the arm shank 40. In other words, the wiper device 10 is also compatible with a wiping surface WS with a large curvature.

As described in detail above, according to the wiper device 10 of the present embodiment, the arm head 50 includes: the pair of outer surface parts 51A and 51B respectively oriented toward one side and the other side in the wiping direction of the wiper blade 20; the linkage recess 58 provided between the pair of outer surface parts 51A and 51B and extending in the wiping direction of the wiper blade 20; and the front head-side abutment surfaces HB1 and HB3 and the rear head-side abutment surfaces HB2 and HB4 each provided at the pair of outer surface parts 51A and 51B and disposed on two sides of the linkage recess 58 in the long-side direction of the arm head 50. The arm shank 40 includes: the pair of inner surface parts 49A and 49B respectively oriented toward the one side and the other side in the wiping direction of the wiper blade 20 and respectively opposed to the pair of outer surface parts 51A and 51B; the linkage shaft 43 provided between the pair of inner surface parts 49A and 49B, extending in the wiping direction of the wiper blade 20, and linked to the linkage recess 58; and the front shank-side abutment surfaces SB1 and SB3 and the rear shank-side abutment surfaces SB2 and SB4 each provided at the pair of inner surface parts 49A and 49B, disposed on two sides of the linkage shaft 43 in the long-side direction of the arm shank 40, and respectively abutted against the front head-side abutment surfaces HB1 and HB3 and the rear head-side abutment surfaces HB2 and HB4 in the wiping direction of the wiper blade 20.

Accordingly, when the axial line CS of the linkage shaft 43 and the axial line CH of the linkage recess 58 are about to shift from each other, the arm shank 40 and the arm head 50 are abutted against each other respectively at two spots on both sides of the linkage shaft 43 and the linkage recess 58 in the long-side direction thereof. Thus, rattling of the wiper blade 20 in the wiping direction is reliably suppressed. In addition, it is possible to distribute the load applied to the linkage part (linkage shaft 43 and linkage recess 58) between the arm shank 40 and the arm head 50, and the linkage shaft 43 and the linkage recess 58 can be protected.

Thus, wiping performance of the wiper device 10 can be improved. In addition, occurrence of so-called chattering noise and the like caused by rattling can be effectively suppressed, and thus it becomes possible to be effectively applied to electric vehicles and the like (vehicles requiring quietness) in which the power source is an electric motor.

In addition, according to the wiper device 10 of the present embodiment, the front shank-side abutment surfaces SB1 and SB3 and the rear shank-side abutment surfaces SB2 and SB4 are provided respectively at the front protrusions CPa and CPc and the rear protrusions CPb and CPd which protrude from the pair of inner surface parts 49A and 49B toward the pair of outer surface parts 51A and 51B.

Accordingly, the pair of sidewall parts 41 (the pair of inner surface parts 49A and 49B) forming the arm shank 40 can be reinforced, and thus an overall rigidity of the wiper device 10 can be enhanced. As a result of this as well, wiping performance of the wiper device 10 can be improved, and quietness can be improved.

Furthermore, according to the wiper device 10 of the present embodiment, the front head-side abutment surfaces HB1 and HB3 are disposed between the linkage recess 58 and the wiper blade 20 in the long-side direction of the arm head 50, and the wiper blade 20 sides of the front head-side abutment surfaces HB1 and HB3 are disposed at positions farther from the wiping surface WS than the rear head-side abutment surfaces HB2 and HB4.

Accordingly, it becomes possible to bring the base end side of the wiper blade 20 close to the arm head 50, and thus overall miniaturization (height reduction) of the wiper device 10 becomes possible. Thus, it becomes possible to effectively suppress generation of wind noise during high-speed traveling and the like of the vehicle.

In addition, according to the wiper device 10 of the present embodiment, it is possible to suppress rattling of the arm shank 40 and the arm head 50 and suppress premature damage to the linkage shaft 43 and the linkage recess 58, and thus it becomes possible to improve durability to achieve reduction in manufacturing energy. Thus, it is possible to achieve, in particular, Goal 7 (ensure access to affordable, reliable, sustainable and modern energy for all) and Goal 13 (take urgent action to combat climate change and its impacts) of the Sustainable Development Goals (SDGs) established by the United Nations.

The disclosure is not limited to the above embodiment, and obviously various modifications may be made within a scope without deviating from the spirit thereof. For example, in the above embodiment, it has been shown that the linkage recess 58 is provided at the arm head 50, and the linkage shaft 43 is provided at the arm shank 40. However, the disclosure is not limited thereto, and it is also possible to provide the linkage shaft at the arm head 50 and provide the linkage recess at the arm shank 40. In other words, the relationship in the concave-convex mating may be reversed.

In addition, in the above embodiment, the wiper device 10 has been described taking an example of wiping a windshield (rear glass) provided at the back door of a vehicle such as an automobile. However, the disclosure is not limited thereto, and may also be applied to wiper devices that wipe, for example, a front glass of a vehicle such as an automobile, or a glass of aircraft, railway vehicles, construction machinery, etc.

In addition, the material, shape, dimensions, quantity, arrangement spot, etc. of each component in the above embodiment may be configured in any manner as long as the disclosure can be achieved, and are not limited to the above embodiment.

### Reference Signs List

10: wiper device
20: wiper blade
21: linkage member
21a: linkage part
22: blade rubber
23: cover
24: end cap
30: wiper arm
40: arm shank
41: sidewall part
42: top wall part
43: linkage shaft (shank-side linkage part)
43a: planar part
44: notch part
45: mounting shaft
46: shank-side engagement part
47: spring accommodating recess
47a: taper part
48: reinforcing rib
49A: one inner surface part (shank-side sidewall part)
49B: other inner surface part (shank-side sidewall part)
49C: lock claw
50: arm head
51A: one outer surface part (head-side sidewall part)
51B: other outer surface part (head-side sidewall part)
51C: lock groove
52: fixed body
53: reinforcing member
54: protrusion
55: groove part
57: head-side engagement part
58: linkage recess (head-side linkage part)
58a: opening
60: cover member
70: tension spring
71: coil part
72: first hook part
73: second hook part
74: straight part
75: inclined part
CPa: one front protrusion (first protrusion)
CPb: one rear protrusion (second protrusion)
CPc: other front protrusion (first protrusion)
CPd: other rear protrusion (second protrusion)
HB1, HB3: front head-side abutment surface (first head-side abutment surface)
HB2, HB4: rear head-side abutment surface (second head-side abutment surface)
NT: fastening nut
SB1, SB3: front shank-side abutment surface (first shank-side abutment surface)
SB2, SB4: rear shank-side abutment surface (second shank-side abutment surface)
SH: swing shaft
ST: step part
WS: wiping surface

## Claims

1. A wiper device (10) comprising:
an arm head (50) fixed to a swing shaft (SH);
an arm shank (40) having a base end side rotatably mounted to the arm head (50); and
a wiper blade (20) mounted to a tip side of the arm shank (40) and wiping a wiping surface, wherein
the arm head (50) comprises:
a pair of head-side sidewall parts (51A, 51B) respectively oriented toward one side and the other side in a wiping direction of the wiper blade (20);
a head-side linkage part (58) provided between the pair of head-side sidewall parts (51A, 51B) and extending in the wiping direction of the wiper blade (20); and
a first head-side abutment surface (HB1, HB3) and a second head-side abutment surface (HB2, HB4) each provided at the pair of head-side sidewall parts (51A, 51B) and respectively disposed on two sides of the head-side linkage part (58) in a long-side direction of the arm head (50), and
the arm shank (40) comprises:
a pair of shank-side sidewall parts (49A, 49B) respectively oriented toward one side and the other side in the wiping direction of the wiper blade (20) and respectively opposed to the pair of head-side sidewall parts (51A, 51B);
a shank-side linkage part (43) provided between the pair of shank-side sidewall parts (49A, 49B), extending in the wiping direction of the wiper blade (20), and linked to the head-side linkage part (58); and
a first shank-side abutment surface (SB1, SB3) and a second shank-side abutment surface (SB2, SB4) each provided at the pair of shank-side sidewall parts (49A, 49B), respectively disposed on two sides of the shank-side linkage part (43) in a long-side direction of the arm shank (40), and respectively abutted against the first head-side abutment surface (HB1, HB3) and the second head-side abutment surface (HB2, HB4) in the wiping direction of the wiper blade (20).

2. The wiper device (10) according to claim 1, wherein
the first shank-side abutment surface (SB1, SB3) and the second shank-side abutment surface (SB2, SB4) are respectively provided at a first protrusion (CPa, CPc) and a second protrusion (CPb, CPd) which protrude from the shank-side sidewall part (49A, 49B) toward the head-side sidewall part (51A, 51B).

3. The wiper device (10) according to claim 1 or 2, wherein
the first head-side abutment surface (HB1, HB3) is disposed between the head-side linkage part (58) and the wiper blade (20) in the long-side direction of the arm head (50), and at least a part of the first head-side abutment surface (HB1, HB3) on a wiper blade side is disposed at a position farther from the wiping surface than the second head-side abutment surface (HB2, HB4).
